(19) Europäisches Patentamt / European Patent Office / Office européen des brevets

(11) **EP 1 855 408 A1**

(12) **EUROPEAN PATENT APPLICATION**
published in accordance with Art. 158(3) EPC

(43) Date of publication:
**14.11.2007 Bulletin 2007/46**

(51) Int Cl.:
*H04J 15/00* (2006.01)     *H04L 1/16* (2006.01)

(21) Application number: **06729977.6**

(22) Date of filing: **24.03.2006**

(86) International application number:
**PCT/JP2006/306029**

(87) International publication number:
**WO 2006/101213 (28.09.2006 Gazette 2006/39)**

(84) Designated Contracting States:
**DE FR GB**

(30) Priority: **25.03.2005 CN 200510059485**

(71) Applicant: **MATSUSHITA ELECTRIC INDUSTRIAL CO., LTD.**
**Osaka 571-8501 (JP)**

(72) Inventors:
• **YU, Xiaohong**
  **Panasonic R&D Center China Co.Ltd**
  **Beijing 100080 (CN)**

• **LI, Jifeng**
  **Matsuhsita Electric Industrial Co.Ltd**
  **2-1-61, Shiromi, Chuo-ku**
  **Osaka 540-6207 (JP)**

(74) Representative: **Grünecker, Kinkeldey,**
**Stockmair & Schwanhäusser**
**Anwaltssozietät**
**Maximilianstrasse 58**
**80538 München (DE)**

(54) **MIMO COMMUNICATION APPARATUS AND DATA RETRANSMISSION METHOD**

(57)     A MIMO communication apparatus wherein HARQ technique is utilized, in a MIMO system, to simplify feedback information and hence reduce the amount of information to be transmitted, thereby saving the transmission resources of the system, while improving the efficiency of data transmission. Additionally, this MIMO communication apparatus has a simple structure, while being capable of performing a reliable data retransmission. This MIMO communication apparatus comprises means (buffer 202) for storing ACK/NACK information of each of data substreams generated and fed back by another MIMO communication apparatus; means (transmission efficiency estimating part 208) for estimating, based on the stored information, a transmission efficiency of each data substream; and means (antenna selecting part 203) for selecting, in accordance with a result of that estimation, a predetermined number of antennas having high transmission efficiencies. This MIMO communication apparatus then retransmits data, for which reception errors have occurred, from the selected antennas.

FIG.2A

**Description**

Technical Field

The present invention relates to a MIMO (Multi-Input/Multi-Output) communication apparatus, and, more particularly, relates to a data retransmission method for the MIMO communication apparatus.

Background Art

In recent years, in accordance with logical and technical development, a number of new techniques and applications are developed in a mobile communication field. Such techniques include OFDM (Orthogonal Frequency Division Multiplexing) and MIMO. These new techniques significantly improve the performance of mobile communication systems and satisfy requirements for wireless multimedia and high rate data transmission. The MIMO technique is a massive breakthrough in an intelligent antenna technique in a wireless mobile communication field. The MIMO technique transmits and receives data using a plurality of antennas.

By utilizing the MIMO technique, channel capacity is increased, and channel reliability is also improved, so that it is possible to reduce a coding error rate. The maximum capacity or upper limit capacity of the MIMO system linearly increases in accordance with an increase in the minimum number of antennas. However, under the same condition, in a normal intelligent antenna system where the MIMO receiving apparatus or MIMO transmitting apparatus uses a multi-antenna or antenna array, the capacity of the system increases in accordance with an increase in the logarithm of the number of antennas. When the two systems are compared, the MIMO technique has very high potential to improve the capacity of a wireless communication system and is a core technique to be adopted by next generation mobile communication systems.

In data service, requirements for a transmission error rate are high. For example, a frame error rate is required to be 0.1%. Thus, it is necessary to utilize channel coding and error correction in order to maintain high performance in a very poor radio channel environment. At present, a technique that is generally used is a Hybrid-Automatic Repeat Request (HARQ). In this technique, detection and error correction are performed by combining an Automatic Repeat Request technique (ARQ) and a Forward Error Correction (FEC) technique. At present, there are three types of the hybrid-automatic repeat request technique. In the first type, the MIMO receiving apparatus discards data that is not received properly, instructs the MIMO transmitting apparatus through a feedback channel to retransmit a copy of the data, and newly receives retransmission data and independently decodes the retransmission data. In the second type, the MIMO receiving apparatus does not discard data where a reception error occurs and decodes the data in combination with retransmission data. In the third type, although retransmission data can be combined with previous data, the retransmission data includes all information that can be properly received.

When error correction is performed using a HARQ, the MIMO transmitting apparatus transmits encoded data to the MIMO receiving apparatus, and the MIMO receiving apparatus receives the data and performs error correction decoding on the data. If the data can be properly received, the MIMO receiving apparatus receives information and transmits ACK information to the MIMO transmitting apparatus. If the data cannot be properly received, that is, an error cannot be corrected, the MIMO receiving apparatus transmits NACK information to the MIMO transmitting apparatus to request the MIMO transmitting apparatus to retransmit the data, and decodes the retransmission data received by the MIMO receiving apparatus.

The method of improving the reliability of system transmission and increasing system throughput in the MIMO system utilizing a HARQ technique is one of important study issues. Generally, in the MIMO system, when there is an error in data substreams, the MIMO transmitting apparatus performs encoding and modulation again on the data where a reception error occurs and retransmits the data from the original antennas. Alternatively, the MIMO transmitting apparatus may retransmit the data from antennas different from the original antennas based on SINR values of other antennas fed back from the MIMO receiving apparatus. When antennas different from the original antennas are selected and data is retransmitted from the selected antennas, the data transmission efficiency can be improved.

Disclosure of Invention

Problems to be Solved by the Invention

In the MIMO system, the MIMO transmitting apparatus selects antennas and retransmits data based on the SINR values fed back from the MIMO receiving apparatus, so that the data transmission efficiency can be improved. However, in the case of the method, the MIMO receiving apparatus needs to feed back SINR values of transmission channels to the MIMO transmitting apparatus, and the amount of information to be transmitted is large. Therefore, there is a problem that the transmission resources of the system are wasted and the transmission efficiencydeteriorates. That is, there is aproblemthat the overall system throughput decreases.

Further, an error may occur in the SINR values fed back from the MIMO receiving apparatus due to channel characteristics to be transmitted, and this has influence on the accuracy of determination for data retransmission and the selection of retransmitting antennas.

It is therefore an object of the present invention to provide a MIMO communication apparatus that is capable of improving the data transmission efficiency while saving the transmission resource of the system by utilizing a HARQ technique, simplifying feedback information and reducing the amount of information to be transmitted, and that reliably performs data retransmission with a simple configuration in the MIMO system.

Means for Solving the Problem

To achieve the aforementioned object, according to one aspect of the present invention, there is provided a MIMO communication apparatus having: a plurality of buffers that store acknowledgement or negative acknowledgement information of data streams, which are generated by and fed back from a receiving side; a transmission efficiency estimating section that estimates transmission efficiency of the data substreams based on the stored acknowledgement or negative acknowledgement information; and an antenna selecting section that selects an antenna with high transmission efficiency according to the estimation result and retransmits data which had an error from the selected antenna.

Preferably, the plurality of buffers delete acknowledgement or negative acknowledgement information in heads of effective bits of the buffers when new acknowledgement or negative acknowledgement information of the data substreams, which are fed back from the receiving side, are received, shift acknowledgement or negative acknowledgement information of other effective bits by one bit to a head direction, and store new acknowledgement or negative acknowledgement information of the data substreams in tail ends of the effective bits of the buffers.

Preferably, the transmission efficiency estimating section sequentially compares the acknowledgement or negative acknowledge information of binary values stored in the buffers between the data substreams from the lately stored information, and thereby acquires a rank of corresponding transmission efficiency.

Preferably, the transmission efficiency estimating section assigns weights to bits of the acknowledgement or negative acknowledgement information of binary values stored in the buffers, calculates corresponding relative transmission efficiency, and determines a rank of the data substreams based on the calculated relative transmission efficiency.

Preferably, the transmission efficiency estimating section assigns high weights to tail ends of bits of the buffers.

Preferably, the antenna selecting section retransmits data of a data substream with lowest transmission efficiency from an antenna with highest transmission efficiency and retransmits data of a data substream with second lowest transmission efficiency from an antenna with second highest transmission efficiency and sequentially performs retransmission based on the estimated transmission efficiency rank.

According to another aspect of the present invention, a data retransmission method includes the steps of: storing acknowledgement or negative acknowledgement information of data substreams, which are generated by and fed back from a receiving side, in corresponding buffers; estimating transmission efficiency of the data substreams based on the stored acknowledgement or negative acknowledgement information; and selecting an antenna with high transmission efficiency according to the estimation result and retransmitting data which had an error from the selected antenna.

Preferably, the step of storing acknowledgement or negative acknowledgement information of the data substreams, which are generated by and fed back from the receiving side, in corresponding buffers, includes the steps of: when new acknowledgement or negative acknowledgement information of the data sub streams, which are fed back from the receiving side, are received, deleting acknowledgment or negative acknowledgement information in heads of effective bits of the corresponding buffers; shifting acknowledgement or negative acknowledgement in other effective bits by one bit to a head direction; and storing the received new acknowledgement or negative acknowledgement information of the data substreams in tail ends of the effective bits of the corresponding buffers.

Preferably, the step of estimating transmission efficiency of the data substreams based on the stored acknowledgement or negative acknowledgement information, includes the step of sequentially comparing the acknowledgement or negative acknowledgement information of binary values stored in the buffers between the data substreams from the lately stored information and acquiring a rank of corresponding transmission efficiency.

Preferably, the step of estimating transmission efficiency of the data substreams based on the stored acknowledgement or negative acknowledgement information, includes the steps of: assigning weights to bits of the acknowledgement or negative acknowledgement information of binary values stored in the buffers and calculating corresponding relative transmission efficiency; and determining a rank of the data substreams according to the calculated relative transmission efficiency.

Preferably, high weights are assigned to tail ends of bits of the buffers in the step of assigning weights to bits of the acknowledgement or negative acknowledgement information of binary values stored in the buffers.

Preferably, the step of selecting an antenna with high transmission efficiency according to the estimation result and retransmitting data which had an error from the selected antenna, includes the step of retransmitting data of a data substream with lowest transmission efficiency from an antenna with highest transmission efficiency and retransmitting data of a data substream with second lowest transmission efficiency from an antenna with second highest transmission efficiency and sequentially performing retransmission.

Advantageous Effect of the Invention

According to the present invention, based on only ACK/NACK information fed back from the MIMO receiving apparatus, the transmission efficiency of the data substreams is estimated, and a plurality of retransmission data are sequentially retransmitted from an antenna corresponding to a data substream with the highest transmission efficiency (hereinafter, the term "antenna corresponding to a data substream" is described as "antenna"). Thus, reliable data retransmission can be performed with a small amount of transmission information, so that it is possible to improve transmission efficiency while saving the transmission resource of the system.

In other words, according to the present invention, compared with the prior art, reliable data retransmission can be performed with a simple configuration without wasting the transmission resource of the system, so that it is possible to improve system transmission efficiency and increase overall throughput.

Brief Description of Drawings

FIG.1 shows a configuration of a normal MIMO and HARQ system;
FIG.2A shows a configuration of a MIMO transmitting apparatus according to an embodiment of the present invention;
FIG.2B shows a configuration of a MIMO receiving apparatus according to an embodiment of the present invention;
FIG.3 is a flowchart illustrating retransmission processing for the MIMO transmitting apparatus according to an embodiment of the present invention;
FIG. 4 shows a configuration of data stored in a buffer according to an embodiment of the present invention;
FIG.5 illustrates a specific example of the data stored in the data substream buffers of the MIMO transmitting apparatus according to an embodiment of the present invention; and
FIG.6 is a flowchart illustrating retransmitting antenna selection processing based on the data in the data substream buffers of the MIMO transmitting apparatus according to an embodiment of the present invention.

Best Mode for Carrying Out the Invention

Generally, in the MIMO system, when there is an error in data of data substreams to be transmitted, the MIMO transmitting apparatus performs encoding and modulation again on the data where a reception error occurs and retransmits the data from the original antennas. Alternatively, the MIMO transmitting apparatus may retransmit the data from antennas different from the original antennas based on the SINR values of other antennas fed back from the MIMO receiving apparatus. When antennas different from the original antennas are selected and data is retransmitted from the selected antennas, the data transmission efficiency can be improved.

However, when retransmitting antennas are selected based on the SINR values of the antennas, system becomes more complicated, the amount of feedback information is large, and errors may occur. In the MIMO system using a HARQ, the MIMO receiving apparatus receives data and feeds back ACK/NACK information through a feedback channel. Further, the MIMO transmitting apparatus can identify whether or not the MIMO receiving apparatus has properly received the data by receiving the ACK/NACK information fed back from the MIMO receiving apparatus. When the information is ACK, it indicates that data is properly received, and therefore the MIMO transmitting apparatus successively transmits next information. When the information is NACK, it indicates that data is not properly received, and therefore the MIMO transmitting apparatus needs to retransmit the data. Accordingly, ACK/NACK information can reflect the transmission quality of the data substreams, so that it is possible to select retransmitting antennas based on the transmission quality of the data substreams.

In the present invention, data transmission efficiency of the data substreams in the MIMO system is estimated using ACK/NACK feedback information, and antennas used upon retransmission are selected based on the data transmission efficiency of the data substreams.

Specifically, in the MIMO communication apparatus of the present invention, each data substream has a buffer, and the buffer stores ACK/NACK information for data transmission of N times before up to data transmission of this time. The information reflect the transmission efficiency of the data substreams, and a rank can be determined according to the transmission efficiency of the data substreams. For estimating the transmission efficiency of the data substreams using the information, there are two methods: a method (transmission efficiency estimation method 1) of estimating a rank of the transmission efficiency of the data substreams by sequentially comparing information stored in the buffers of data substreams from the lately stored information; andamethod (transmissionefficiency estimation method 2) of estimating relative indicative values of the transmission efficiency of the data substreams by assigning weights to N feedback information in the buffers and performing calculation.

In transmission efficiency estimation method 1, ACK/NACK information for data transmission of N times before up to data transmission of this time are stored in the buffers of the data substreams, and, first, a comparison is performed from the latest data transmission information, that is, a comparison is performed between feedback information of the data substreams transmitted at this time. In this case, it is determined that the transmission efficiency of the data substream where feedback information is ACK is higher than that of the data substream where feedback information is NACK. As a result of the comparison, when two or more data substreams have the same transmission efficiency, a comparison is performed between the information one time before the information of this time. As a result of the comparison, when two ormore data substreams have the same transmission efficiency again, a comparison is performed between the information two times before the information of this time. As described above, an operation of comparison is repeated until the rank of the transmission efficiency of data substreams is determined or a comparison is performed on all feedback information corresponding to N times. When a comparison is performed on all feedback information corresponding to N times and two or more data substreams have the completely same transmission efficiency, the rank among the data substreams having the same transmission efficiency can be arbitrarily specified. When data needs to be retransmitted, antennas are selected based on the transmission efficiency of the data substreams estimated from feedback information, and the data is retransmitted from the selected antennas. When the data transmitted from the antennas with low transmission efficiency is retransmitted, the transmission may be performed from the antennas with high data transmission efficiency.

In transmission efficiency estimation method 2, when there are consecutive NACKs in the information received by data substreams, the rank of the transmission efficiency of the data substreams is determined by assigning the different weights to the NACK information, calculating relative values indicating the data transmission efficiency and performing a comparison among the calculated values to estimate the rank, and antennas for data retransmission are selected according to the rank. When retransmission does not need to be performed, this method has the same result as the result of the first method.

Generally, in the MIMO system, although the data substreams are modulated and encoded based on the SINR information fed back from the MIMO receiving apparatus, the transmission amount of feedback information can be reduced by analyzing channel conditions using ACK/NACK feedback information.

Next, the present invention will be described using the drawings.

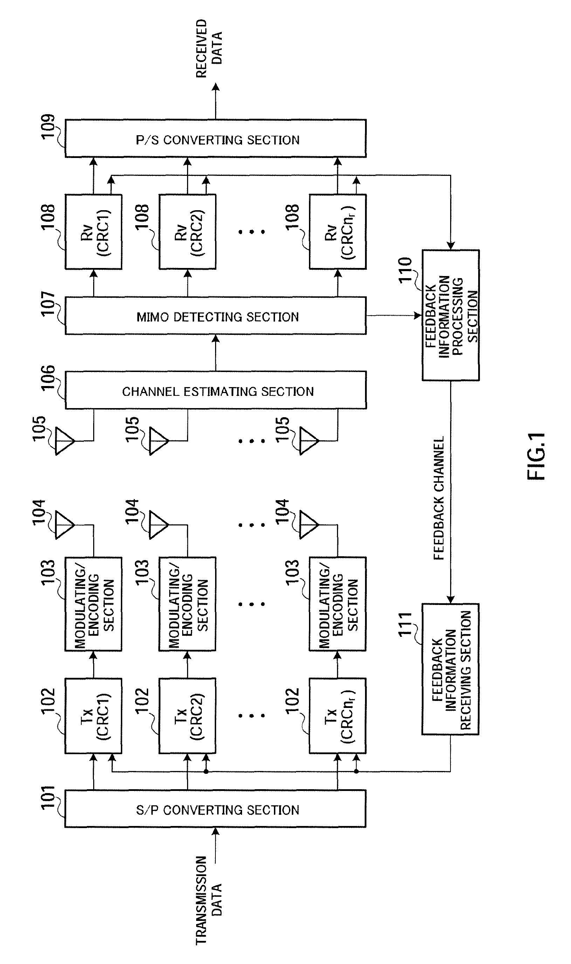

FIG.1 illustrates the configuration of a normal MIMO and HARQ system.

As shown in FIG. 1, a MIMO communication apparatus has S/P converting section 101, CRC (Cyclic Redundancy Check) coding sections 102, encoding/modulating sections 103, antennas 104, feedback receiving section 111, antennas 105, channel estimating section 106, MIMO detecting section 107, CRC checking sections 108, P/S converting section 109 and feedback information processing section 110.

All signals transmitted from the MIMO transmitting apparatus are received through MIMO receiving communication, channel estimation is performed based on the received signals, and equivalent SINR values of the signals are obtained by performing MIMO detection based on the estimated channel characteristics. The feedback information processing section generates feedback information including the decoding result and SINR values of channel information, and feeds back the feedback information to the MIMO transmitting apparatus through a feedback channel.

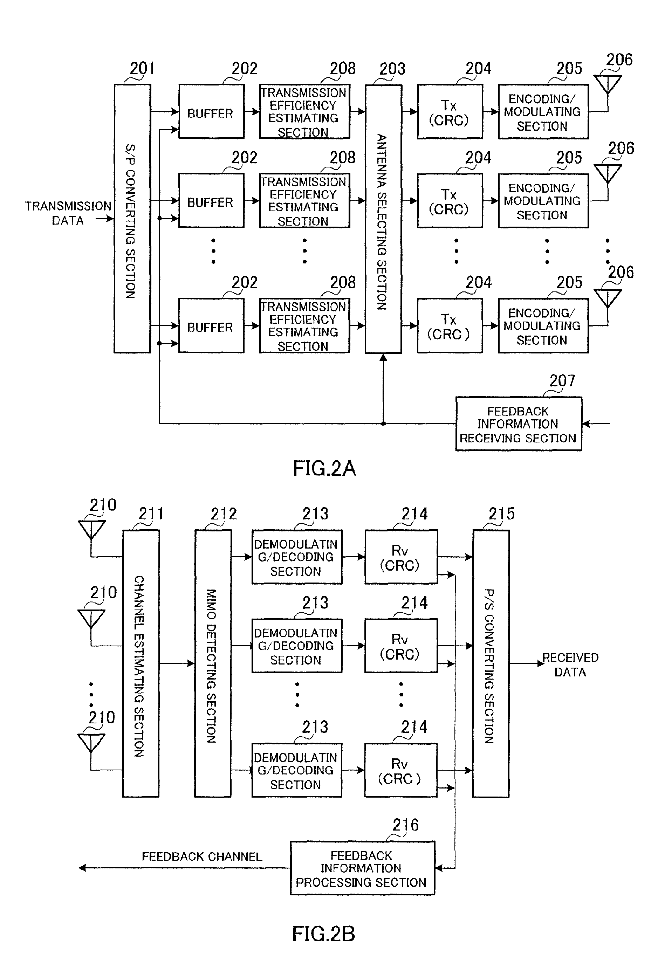

FIG.2A is a block diagram showing the configuration of a MIMO transmitting apparatus according to an embodiment of the present invention.

As shown in the drawing, a radio transmitting apparatus has S/P converting section 201, buffers 202, transmission efficiency estimating sections 208, antenna selecting section 203, CRC (Cyclic Redundancy Check) coding sections 204, encoding/modulating sections 205, antennas 206 and feedback information receiving section 207.

S/P converting section 201 divides transmission data into $n_T$ data substreams which have a one-to-one correspondence with the antennas. Feedback information receiving section 207 receives the fed back ACK/NACK information of transmission data. Buffers 202 store the received ACK/NACK information. When there is NACK in the information, transmission efficiency estimating sections 208 estimate the transmission efficiency of the data substreams based on the ACK/NACK information stored in buffers 202. Antenna selecting section 203 selects appropriate antennas based on the estimated transmission efficiency and retransmits data. When the fed back information of the transmission data are all ACK information, data is properly received and does not need to be retransmitted. Therefore, it is not necessary to perform transmission efficiency estimation and antenna selection. CRC coding sections 204 and encoding/modulating sections 205 perform CRC coding and encoding/modulation on new data substreams or retransmission data substreams. $n_T$ antennas 206 transmit the modulated data.

FIG.2B is a block diagram showing the configuration of a MIMO receiving apparatus according to an embodiment of the present invention.

As shown in the drawing, the radio receiving apparatus has receiving antennas 210, channel estimating section 211, MIMO detecting section 212, demodulating/decoding sections 213, CRC checking sections 214, P/S converting section 215 and feedback information processing section 216.

$n_T$ receiving antennas 210 receive all signals in the space. Channel estimating section 211 estimates a channel by the method based on pilot signals in the received signals or other methods and estimates current channel characteristic matrix H (in a MIMO system, channel characteristics can be expressed by a matrix). MIMO detecting section 212 performs MIMO detection on the data substreams to be transmitted and obtains equivalent SINR values of the data substreams based on estimated channel characteristic matrix H. Demodulating/decoding sections 213 perform demodulation and decoding on the MIMO-detected data substreams. CRC checking sections 214 perform a cyclic redundancy check on the demodulated and decoded data. Feedback information processing section 216 feeds back only ACK/NACK information for the decoded data, as feedback information, to the radio transmitting apparatus through a feedback channel. P/S converting section 215 restores the properly-received data to the original data.

With the above-described configuration, the amount of feedback information to be transmitted from feedback information processing section 216 is smaller than the amount of the normal feedback information, so that system radio resources can be saved. That is, system transmission efficiency can be improved. Further, transmission efficiency estimating sections 208 estimate transmission efficiency based on reliable feedback information, and antenna selecting section 203 selects antennas with high transmission efficiency based on the estimation result and performs retransmission using the selected antennas, so that reliable retransmission can be performed with a simple configuration.

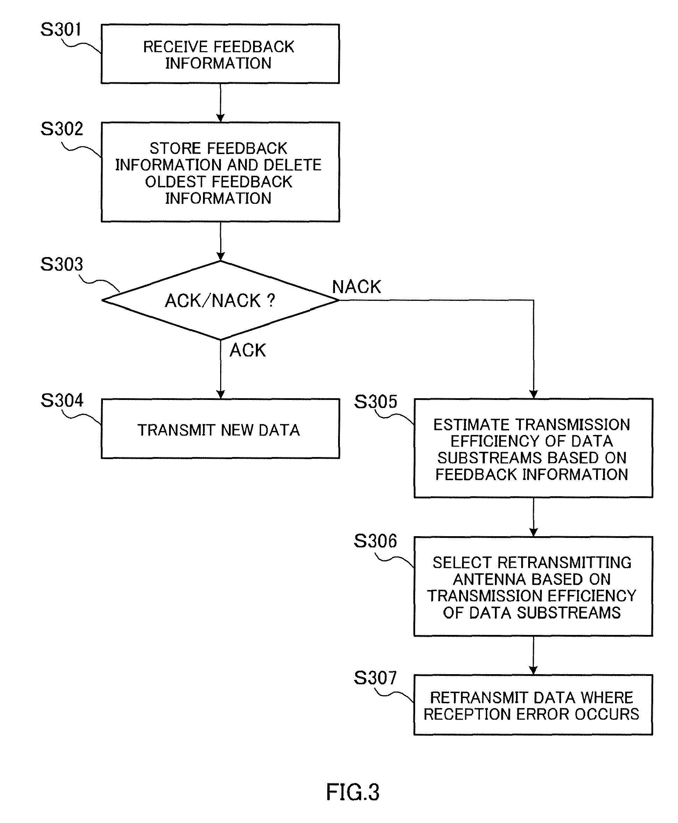

FIG.3 is a flowchart illustrating retransmission processing for the MIMO transmitting apparatus according to an embodiment of the present invention.

As shown in FIG.3, when feedback information are received (S301), the feedback information are stored in buffers and the oldest feedback information in the buffers is deleted (S302). It is determined whether the received feedback information are ACK or NACK (S303), and if all the feedback information are ACK, new data is transmitted (S304). If the feedback information include NACK, the transmission efficiency of the data substreams is estimated based on the feedback information for N times before up to this time, stored in the buffers (S305), and retransmitting antennas are selected based on the estimated transmission efficiency of the data substreams (S306). If a reception error occurs in n data substreams upon selecting retransmitting antennas, n antennas with the best channel conditions are selected, and data is retransmitted from the selected antennas. Specifically, among data where a reception error occurs, data transmitted from a channel with the worst channel conditions is retransmitted from an antenna with the best channel conditions, and data transmitted from a channel with the second worst channel conditions is retransmitted from an antenna with the second best channel conditions, and data retransmission is sequentially performed in this way. The channel conditions as used herein correspond to the transmission efficiency estimated based on the feedback information. When retransmitting antennas are selected, the data where a reception error occurs is retransmitted (S307).

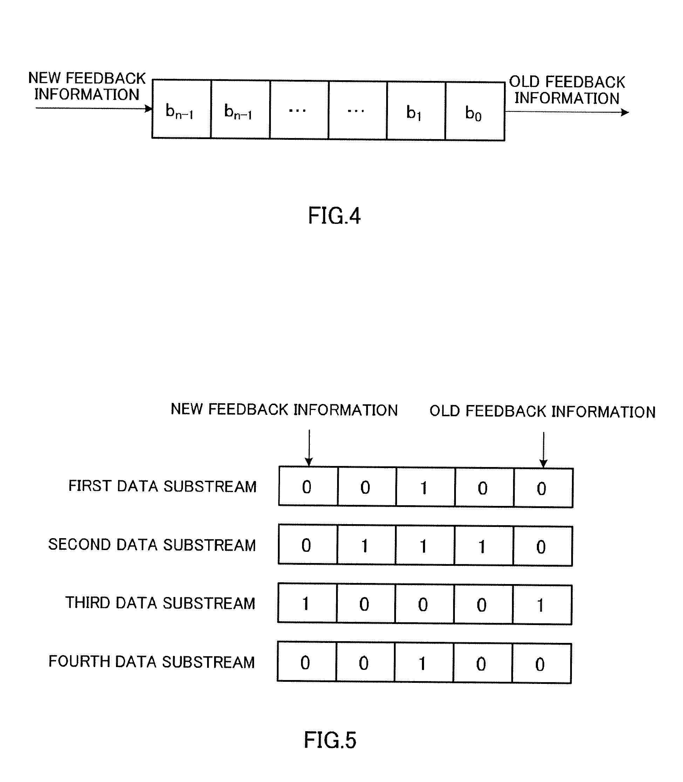

FIG.4 shows the configuration of data stored in buffers 202 according to an embodiment of the present invention.

In the buffers of the data substreams, transmission information which are feedback information of N times before up to this time, are stored, and information bits are stored from the lately received information bits. As shown in FIG.4, $b_{n-1}$ is a tail end and indicates the latest received feedback information, and $b_0$ is a head and indicates the oldest feedback information. The channel estimation accuracy can be improved by storing feedback information for a plurality of times in the buffers.

FIG.5 illustrates a specific example of the data stored in the data substream buffers of the MIMO transmitting apparatus according to an embodiment of the present invention.

In FIG. 5, it is assumed that there are four data substreams, that is, there are four antennas. The information corresponding to past five times are stored in the buffers of the data substreams. Here, "0" indicates ACK, and "1" indicates NACK. The content of the first data substream buffer is, from the tail end (left side), "00100", the content of the second data substream buffer is "01110", the content of the third data substream buffer is "10001", and the content of the fourth data substream buffer is "00100", respectively.

First, transmission efficiency estimation method 1 will be described. In this method, the rank of the transmission efficiency of the substreams is estimated by sequentially performing a comparison among feedback information stored in the data substream buffers from the lately stored information.

Information at the tail ends of the four data substreams are 0, 0, 1 and 0, respectively, and there is an error in the data transmitted from the third antenna, and the transmission efficiency of the third antenna is determined to be the worst. Therefore, the data where a reception error occurs needs to be retransmitted. Subsequently, a comparison is performed among the information of the second time from the tail ends of the other three data substreams, and the information are 0, 1 and 0, respectively, and the transmission efficiency of the second data substream is determined to be poor. The information of the first and fourth data substreams are the same as previous information, and a comparison is continuously performed between the information of the third time from the tail ends. In the results obtained by sequentially comparing the information corresponding to the past five times, the information corresponding to five times in the first data substream are completely the same as the information in the fourth data substream, and the rank of the two data substreams can be arbitrarily determined. For example, when the transmission efficiency of the first data substream is first place, the rank of the transmission efficiency of all data substreams is, the first data substream, the fourth data substream, the second data substream, and the third data substream, in that order.

Next, transmission efficiency estimation method 2 will be described. In the method, the rank of the transmission efficiency of the substreams is estimated by assigning different weights to feedback information stored in the substream buffers and calculating the relative transmission efficiency of the data substreams.

Upon calculation, weights are assigned so that the weight value of new feedback information is higher than the weight value of old feedback information and the weight value of information of retransmission data is higher than the weight of information of the first transmitted data. When the calculated value becomes smaller, the transmission efficiency of the corresponding data substream becomes higher. For example, as shown in FIG.4, when retransmission does not need to be performed, that is, there are no consecutive 1, the weight of $b_m$ ($0 \leq m \leq n-1$) is $2^m$. When retransmission needs to be performed, that is, there are consecutive 1, the weight value of the k-th consecutive 1 is calculated by multiplying the original weight value by $2^{k-1}$. That is, the relative transmission efficiency of the first to fourth data substreams can be expressed by following equations 1 to 4, respectively.

$$0 \times 2^4 + 0 \times 2^3 + 1 \times 2^2 + 0 \times 2^1 + 0 \times 2^0 = 4 \quad \cdots \quad (\text{Equation 1})$$

$$0 \times 2^4 + 1 \times 2^3 + 1 \times 2^2 \times 2^1 + 1 \times 2^1 \times 2^2 + 0 \times 2^0 = 24 \quad \cdots \quad (\text{Equation 2})$$

$$1 \times 2^4 + 0 \times 2^3 + 0 \times 2^2 + 0 \times 2^1 + 1 \times 2^0 = 17 \quad \cdots \quad (\text{Equation 3})$$

$$0 \times 2^4 + 0 \times 2^3 + 1 \times 2^2 + 0 \times 2^1 + 0 \times 2^0 = 4 \quad \cdots \quad (\text{Equation 4})$$

As a result, the values of the four buffers are 4, 24, 17 and 4, respectively, and the rank of transmission efficiency is, the first data substream, the fourth data substream, the third data substream, and the second data substream, in that order.

Although the rank of the transmission efficiency of the data substreams obtained by the above-described two methods are different from each other, the first method is suitable when channel fluctuation is relatively moderate, and the second method is suitable when channel fluctuation is relatively rapid.

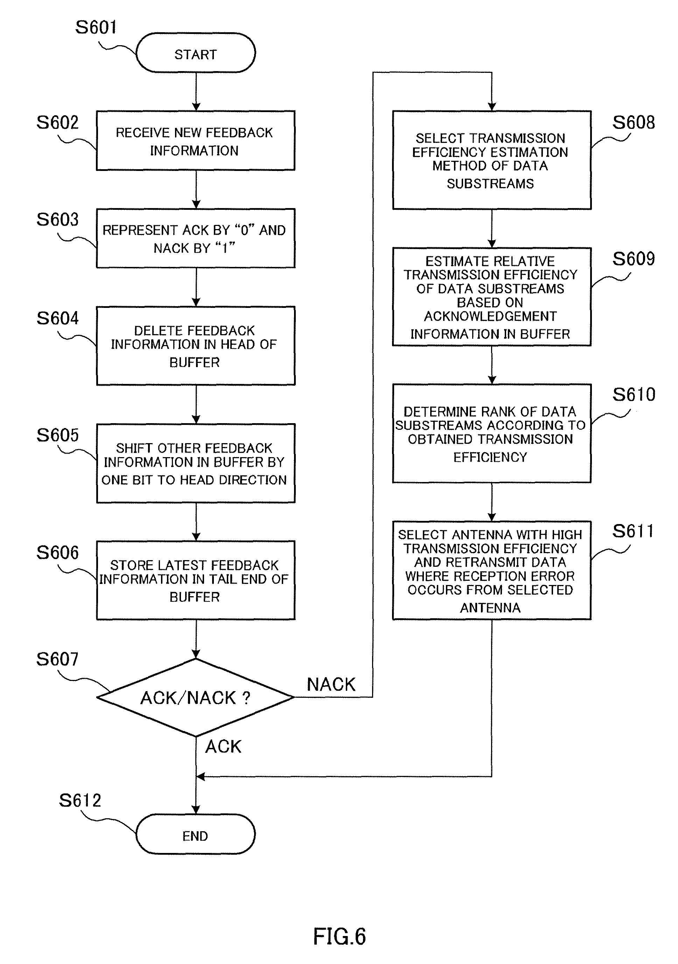

FIG.6 is a flowchart illustrating retransmitting antenna selection processing based on data of data substream buffers of the MIMO transmitting apparatus according to an embodiment of the present invention.

First, processing starts (S601). New feedback information is received (S602), and, if the received feedback information is ACK, the information is expressed by "0", and, if the information is NACK, the information is expressed by "1" (S603). The oldest feedback information in each buffer is deleted (S604). In the present embodiment, the oldest feedback information is a bit in the head of each buffer. The other feedback information in each buffer are shifted by one bit to a head direction (S605), and the latest feedback information is stored in the tail end of eachbuffer (S606). It is determined whether or not the received feedback information have NACK (S607), and, if all feedback information are ACK, the processing ends (S612). If the feedback information have NACK, first, a data substream transmission efficiency estimation method is selected (S608), and the relative transmission efficiency of data substreams is estimated by the selected estimation method using the information stored in the buffers (S609). Subsequently, the rank of the data substreams is estimated based on the estimated transmission efficiency (S610). When antennas with high transmission efficiency are selected and the data where a reception error occurs is retransmitted (S611), the processing ends (S612).

Specifically, for example, when there are four data substreams and the buffers provided for the data substreams store transmission information corresponding to three times, the information for a given time stored in the four data substream buffers are 000, 101, 001 and 100, respectively. The tail ends of the second and fourth data substreams are 1, and it indicates that there is an error in data of the two data substreams, and the data needs to be retransmitted. Upon retransmission, the transmission efficiency of the data substreams is estimated based on the information in order to select antennas with good channel characteristics. When the rank of the transmission efficiency of the data substreams is determined using the method of sequentially comparing information of the data substreams from the tail ends of buffers, the rank is, the first data substream, the third data substream, the fourth data substream and the second data substream, in that order. Therefore, upon data retransmission, the original second data substream is retransmitted from the antenna from which the first data substream is initially transmitted, and the original fourth data substream is retransmitted from the antenna from which the third data substream is initially transmitted. According to this method, the accuracy of retransmitted data is improved, so that it is possible to enhance the data transmission efficiency.

Although a typical embodiment is described above, various other changes, substitutions and additions can be made. Accordingly, the present invention is not limited to the above-described embodiment.

As described above, according to the present embodiment, a feedback information processing section feeds back only ACK/NACK information as feedback information to the MIMO transmitting apparatus, stores the information corresponding to a plurality of times while updating the feedback information received by buffers of the MIMO transmitting apparatus, calculates each transmission efficiency and estimates the rank according to the characteristics of channel change, and sequentially retransmits data from antennas with high transmission efficiency, so that it is possible to reduce the amount of feedback information to be transmitted, reliably retransmit data from antennas with high transmission efficiency without wasting data resources, and improve overall system throughput.

In the present embodiment, although buffers 202, transmission efficiency estimating sections 208 and antenna selecting section 203 are provided to the radio transmitting apparatus, the present invention is not limited to this, and buffers 202, transmission efficiency estimating sections 208 and antenna selecting section 203 may be provided to radio receiving apparatuses such as a communication terminal or mobile station. Information of transmission efficiency which is the estimation result and antenna selection may be fed back, and data may be retransmitted from antennas with good channel conditions based on the feedback information.

In the present embodiment, although the present invention is configured with hardware as an example, the present invention can also be implemented with software. For example, by describing the data retransmission method algorithm in the MIMO communication apparatus according to the present invention in a programming language, storing this program in a memory and making the information processing section execute this program, it is possible to implement the same function as the MIMO communication apparatus of the present invention.

The present application is based on Chinese Patent Application No.200510059485.2, filed on March 25, 2005, entire content of which is expressly incorporated by reference herein.

Industrial Applicability

The MIMO communication apparatus of the present invention can be applied to a multi-antenna transmission system and the like that perform reliable data transmission in a poor radio channel environment where the characteristics of channel change are not constant.

**Claims**

1. A MIMO communication apparatus comprising:

   a plurality of buffers that store acknowledgement or negative acknowledgement information of data streams, which are generated by and fed back from a receiving side;
   a transmission efficiency estimating section that estimates transmission efficiency of the data substreams based on the stored acknowledgement or negative acknowledgement information; and
   an antenna selecting section that selects an antenna with high transmission efficiency according to the estimation result and retransmits data which had an error from the selected antenna.

2. The MIMO communication apparatus according to claim 1, wherein the plurality of buffers delete acknowledgement or negative acknowledgement information in heads of effective bits of the buffers when new acknowledgement or negative acknowledgement information of the data substreams, which are fed back from the receiving side, are received, shift acknowledgement or negative acknowledgement information of other effective bits by one bit to a head direction, and store new acknowledgement or negative acknowledgement information of the data substreams in tail ends of the effective bits of the buffers.

3. The MIMO communication apparatus according to claim 1, wherein the transmission efficiency estimating section sequentially compares the acknowledgement or negative acknowledge information of binary values stored in the buffers between the data substreams from the lately stored information, and thereby acquires a rank of corresponding transmission efficiency.

4. The MIMO communication apparatus according to claim 1, wherein the transmission efficiency estimating section assigns weights to bits of the acknowledgement or negative acknowledgement information of binary values stored in the buffers, calculates corresponding relative transmission efficiency, and determines a rank of the data substreams based on the calculated relative transmission efficiency.

**5.** The MIMO communication apparatus according to claim 4, wherein the transmission efficiency estimating section assigns high weights to tail ends of bits of the buffers.

**6.** The MIMO communication apparatus according to claim 1, wherein the antenna selecting section retransmits data of a data substream with lowest transmission efficiency from an antenna with highest transmission efficiency and retransmits data of a data substream with second lowest transmission efficiency from an antenna with second highest transmission efficiency and sequentially performs retransmission based on the estimated transmission efficiency rank.

**7.** A data retransmission method comprising the steps of:

storing acknowledgement or negative acknowledgement information of data substreams, which are generated by and fed back from a receiving side, in corresponding buffers;
estimating transmission efficiency of the data substreams based on the stored acknowledgement or negative acknowledgement information; and
selecting an antenna with high transmission efficiency according to the estimation result and retransmitting data which had an error from the selected antenna.

**8.** The data retransmission method according to claim 7, wherein the step of storing acknowledgement or negative acknowledgement information of the data substreams, which are generated by and fed back from the receiving side, in corresponding buffers, comprises the steps of:

when new acknowledgement or negative acknowledgement information of the data substreams, which are fed back from the receiving side, are received, deleting acknowledgment or negative acknowledgement information in heads of effective bits of the corresponding buffers;
shifting acknowledgement or negative acknowledgement in other effective bits by one bit to a head direction; and
storing the received new acknowledgement or negative acknowledgement information of the data substreams in tail ends of the effective bits of the corresponding buffers.

**9.** The data retransmission method according to claim 8, wherein the step of estimating transmission efficiency of the data substreams based on the stored acknowledgement or negative acknowledgement information, comprises the step of sequentially comparing the acknowledgement or negative acknowledgement information of binary values stored in the buffers between the data substreams from the lately stored information and acquiring a rank of corresponding transmission efficiency.

**10.** The data retransmission method according to claim 8, wherein the step of estimating transmission efficiency of the data substreams based on the stored acknowledgement or negative acknowledgement information, comprises the steps of:

assigning weights to bits of the acknowledgement or negative acknowledgement information of binary values stored in the buffers and calculating corresponding relative transmission efficiency; and
determining a rank of the data substreams according to the calculated relative transmission efficiency.

**11.** The data retransmission method according to claim 10, wherein high weights are assigned to tail ends of bits of the buffers in the step of assigning weights to bits of the acknowledgement or negative acknowledgement information of binary values stored in the buffers.

**12.** The data retransmission method according to claim 7, wherein the step of selecting an antenna with high transmission efficiency according to the estimation result and retransmitting data which had an error from the selected antenna, comprises the step of retransmitting data of a data substream with lowest transmission efficiency from an antenna with highest transmission efficiency and retransmitting data of a data substream with second lowest transmission efficiency from an antenna with second highest transmission efficiency and sequentially performing retransmission.

TRANSMISSION DATA → 101 S/P CONVERTING SECTION

102 Tx (CRC1) → 103 MODULATING/ENCODING SECTION → 104

102 Tx (CRC2) → 103 MODULATING/ENCODING SECTION → 104

· · ·

102 Tx (CRCn$_r$) → 103 MODULATING/ENCODING SECTION → 104

111 FEEDBACK INFORMATION RECEIVING SECTION

FEEDBACK CHANNEL

105 · · · 105 · · · 105

106 CHANNEL ESTIMATING SECTION

107 MIMO DETECTING SECTION

110 FEEDBACK INFORMATION PROCESSING SECTION

108 Rv (CRC1)

108 Rv (CRC2)

· · ·

108 Rv (CRCn$_r$)

109 P/S CONVERTING SECTION → RECEIVED DATA

FIG.1

10

FIG.2A

FIG.2B

S301 — RECEIVE FEEDBACK INFORMATION

S302 — STORE FEEDBACK INFORMATION AND DELETE OLDEST FEEDBACK INFORMATION

S303 — ACK/NACK ?

ACK

S304 — TRANSMIT NEW DATA

NACK

S305 — ESTIMATE TRANSMISSION EFFICIENCY OF DATA SUBSTREAMS BASED ON FEEDBACK INFORMATION

S306 — SELECT RETRANSMITTING ANTENNA BASED ON TRANSMISSION EFFICIENCY OF DATA SUBSTREAMS

S307 — RETRANSMIT DATA WHERE RECEPTION ERROR OCCURS

FIG.3

NEW FEEDBACK
INFORMATION

| $b_{n-1}$ | $b_{n-1}$ | ... | ... | $b_1$ | $b_0$ |

OLD FEEDBACK
INFORMATION

FIG.4

NEW FEEDBACK INFORMATION          OLD FEEDBACK INFORMATION

FIRST DATA SUBSTREAM

| 0 | 0 | 1 | 0 | 0 |

SECOND DATA SUBSTREAM

| 0 | 1 | 1 | 1 | 0 |

THIRD DATA SUBSTREAM

| 1 | 0 | 0 | 0 | 1 |

FOURTH DATA SUBSTREAM

| 0 | 0 | 1 | 0 | 0 |

FIG.5

FIG.6

<table>
<tr><td colspan="2">**INTERNATIONAL SEARCH REPORT**</td><td>International application No.<br><br>PCT/JP2006/306029</td></tr>
</table>

| A. | CLASSIFICATION OF SUBJECT MATTER |
|---|---|

***H04J15/00***(2006.01), ***H04L1/16***(2006.01)

According to International Patent Classification (IPC) or to both national classification and IPC

| B. | FIELDS SEARCHED |
|---|---|

Minimum documentation searched (classification system followed by classification symbols)
H04J15/00, H04L1/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
   IEEE

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br>A | WO 2005/004376 A1 (Fujitsu Ltd.),<br>13 January, 2005 (13.01.05),<br>Full text; all drawings<br>& EP 1615365 A1 | 1,2,6-8,12<br>3-5,9-11 |
| Y<br>A | JP 2001-333051 A (Matsushita Electric<br>Industrial Co., Ltd.),<br>30 November, 2001 (30.11.01),<br>Claims 1, 5, 25<br>& AU 5879701 A          & EP 1195936 A1<br>& US 2002/0106989 A1    & KR 2026952 A<br>& CN 1381114 A          & WO 2001/091354 A1 | 1,2,6-8,12<br>3-5,9-11 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>   05 April, 2006 (05.04.06) | Date of mailing of the international search report<br>   18 April, 2006 (18.04.06) |
|---|---|
| Name and mailing address of the ISA/<br>   Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/306029 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-72427 A  (Matsushita Electric Industrial Co., Ltd.), 04 March, 2004 (04.03.04), Claim 6 (Family: none) | 1-12 |
| A | JP 2005-20530 A  (Toshiba Corp.), 20 January, 2005 (20.01.05), Claim 1 & EP 1492263 A1 | 1-12 |
| A | JP 2003-78480 A  (NTT Docomo Inc.), 14 March, 2003 (14.03.03), Claims 1 to 4 & US 2003/0003937 A1    & KR 2094920 A & CN 1416227 A         & EP 1267586 A1 | 1-12 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200510059485